# EUROPÄISCHE PATENTANMELDUNG

(11) **EP 1 566 346 A1**
(43) Veröffentlichungstag der Anmeldung: **24.08.2005**
(21) Anmeldenummer: 05003177.2
(22) Anmeldetag: 15.02.2005
(51) Int. Cl.: B65D 75/68

(54) **Aufreissstreifen und seine Verwendung zur Herstellung von Folienverpackungen**

(30) Priorität: 19.02.2004 DE 102004008568
(71) Anmelder: Wipak Walsrode GmbH & Co. KG, 29699 Bornlitz (DE)
(72) Erfinder: Jacobsen, Sven Dr., 29683 Bad Fallingbostel (DE); Koppers, Markus Dr., 29683 Bad Fallingbostel (DE)
(74) Vertreter: Läufer, Martina

(57) **Zusammenfassung**

Der mehrschichtig ausgebildete beidseitig heißsiegelbare Aufreißstreifen wird zur Herstellung einer Folienverpackung verwendet, die aus ein- oder beidseitig heißsiegelbarer Folie besteht und mit wenigstens einer Siegelnaht verschlossen ist. Während der Herstellung der Folienverpackung wird der Aufreißstreifen auf die siegelbare Verpackungsinnenseite durchgehend aufgesiegelt und durch die Siegelnaht oder die Siegelnähte hindurchgeführt. Im Falle eines Folienschlauchbeutels wird der Aufreißstreifen parallel zur Längsnaht geführt.

## Beschreibung

Die Erfindung betrifft einen Aufreißstreifen für Folienverpackungen und insbesondere dessen Verwendung bei der Herstellung eines geschweißten oder heißgesiegelten Folienschlauchbeutels, der an beiden Schlauchenden mit jeweils einer als Schweiß- oder Siegelnaht ausgebildeten Quernaht verschlossen wird.

Folienverpackungen werden für verschiedenstes Verpackungsgut verwendet, da unter anderem auf dem Nahrungsmittelsektor. Die Folien, heute im Allgemeinen Folienverbunde, genügen dabei vielfältigen Anforderungen. Sie können u. a. mit unterschiedlichen Barriereschichten praktisch diffusionsdicht ausgerüstet werden. Dünne Metallschichten (Metallisierungen) machen gleichzeitig lichtdicht. Auf diese Weise sind Folienverpackungen an die verschiedensten Verwendungszwecke und Ansprüche anpassbar.

Zahlreiche Nahrungsmittel und Convenience-Produkte sollten gas- und feuchtigkeitsdicht verpackt werden. Dies gilt besonders für fetthaltige und trocken zu haltende Produkte. Hierfür ist es erforderlich, dass nicht nur die Verpackungsfolien den Ansprüchen genügen, auch die an den Verpackungen vorhandenen Nähte müssen im gewünschten Sinne dicht sein und über den Verpackungszeitraum bleiben.

Um dies zu erreichen werden häufig sogenannte Schweiß- oder Siegelnähte eingesetzt. Für die Herstellung einer Heißsiegelnaht werden zwei Folien am Ort der Naht zumindest im Bereich der gegeneinander liegenden Oberflächen über den Erweichungspunkt erwärmt und zusammengedrückt. Sie weisen hierfür an ihrer Oberfläche im Allgemeinen gut aufschmelzbare sogenannte Siegelschichten auf.

Eine Heißsiegelnaht besitzt einer geklebten oder kaltgesiegelten Naht gegenüber den Vorteil, dass keine Diffusion durch die Klebeschicht erfolgen kann und dass sie Zugbelastungen besser standhält.

Mit Siegelnähten verbundene Folienverpackungen, die zum Schutz des Verpackungsguts i. a. auch recht reißfest sind, besitzen jedoch andererseits den Nachteil, dass sie von Hand schlecht zu öffnen sind.

Im Stand der Technik sind daher seit langer Zeit verschiedene Aufreißhilfen bekannt, die das Öffnen von Verpackungen allgemein und auch von Folienverpackungen und speziell Folienschlauchbeuteln erleichtern sollen. Zu diesen Aufreißhilfen gehören u. a. von der Folienverpackung nach außen vorstehende Grifflappen, die das Anfassen und Aufreißen erleichtern. Auch werden an den besonders reißfesten Nähten häufig kurze Schlitze senkrecht zur Naht angebracht, die eine Sollrissstelle vorgeben. Der Nachteil dieser Aufreißhilfen besteht darin, dass ein relativ unkontrollierbarer Riss entsteht, der die Verpackung in willkürlicher Richtung zerstört, so dass sie häufig für die Aufbewahrung des restlichen Inhalts nach Anbruch unbrauchbar wird.

Um dies zu beheben sind - ebenfalls schon seit sehr langer Zeit - Aufreißstreifen bekannt, die gleichzeitig das Aufreißen als solches erleichtern und die genaue Rissposition vorgeben sollen. Frühe Aufreißstreifen bestehen aus textilen Materialien, Glasfasern und dergleichen; heute werden vorwiegend Aufreißstreifen aus Folie verwendet, die allerdings hohen Anforderungen an ihre mechanische Festigkeit standhalten müssen, da sie in jedem Falle deutlich reißfester als das zu öffnende Verpackungsmaterial zu sein haben.

Aus der DE OS 1 536 188 ist eine gas- und feuchtigkeitsdichte Verpackung für Weichkäsescheiben bekannt, die neben einer dort speziell vorgeschlagenen als Mittel-Längsnaht ausgebildeten Griffleiste ein Reißband besitzt, welches auf der Innenseite, d.h. der der Ware zugekehrten Seite, des Verpackungsmaterials aufliegt. Dieses Verpackungsmaterial ist mit einer Schicht aus wachsartigem, feuchtigkeitsdichtem Material belegt, an dem das Reißband haftet. Die Verpackungsnähte sind unter Druck verschweißt. Das Reißband ragt über die Quernähte der Verpackung hinaus und besitzt zum leichteren Erfassen einen Grifflappen. Für moderne Folienverpackungen ist dieses Reißband nicht verwendbar.

Auch bekannte ein- oder mehrschichtige Folienaufreißstreifen sind für Folienverpackungen mit Siegelnähten nicht geeignet, da sie Schwachstellen in der Versiegelung verursachen. Durch die Unterbrechung der Versiegelung bilden sich im Zusammenwirken mit der Mindestdicke des Streifens, die alleine aufgrund der Anforderungen an die Festigkeit vorgegeben ist, Kanülen die die Packung insgesamt undicht machen. Es werden daher bis heute Grifflappen und Aufreißschlitze verwendet.

Das der Erfindung zugrunde liegende Problem besteht darin, eine Folienverpackung mit Siegelnähten so auszubilden, dass sie gezielt unter Bildung eines Schlitzes aufreißbar ist, wobei der Schlitz es ermöglichen soll, das Füllgut herauszunehmen ohne die Packung unkontrolliert zu zerstören. Insbesondere soll ein Folienschlauchbeutel so gezielt aufreißbar sein, dass die Beutelfunktion erhalten bleibt und das Füllgut nicht in einen anderen Behälter oder ein Serviergeschirr umgefüllt werden muss. Gleichzeitig soll die Folienverpackung vor dem Aufreißen dauerhaft gas- und feuchtigkeitsdicht bleiben.

Dieses Problem wird erfindungsgemäß durch einen Aufreißstreifen gelöst, der mehrschichtig ausgebildet und beidseitig heißsiegelbar ist, sowie durch die Verwendung dieses Aufreißstreifens zur Herstellung einer mit wenigstens einer Siegelnaht verschlossenen Folienverpackung aus wenigstens einseitig heißsiegelbarer Folie, wobei der Aufreißstreifen während der Herstellung der Folienverpackung auf die siegelbare Schlauchinnenseite durchlaufend aufgsiegelt und durch die wenigstens eine Siegelnaht hindurchgeführt wird.

Es wurde gefunden, dass ein solcher beidseitig siegelbarer Aufreißstreifen während der Herstellung einer Folienverpackung, beispielsweise eines Folienschlauchbeutels, auf einer dafür geeigneten Verpackungsmaschine mit Hilfe eines dafür ausgelegten Siegelschuhs entlang einer vorgegebenen Linie auf die siegelbare Verpackungsinnenseite aufgesiegelt werden kann. Der Siegelschuh kann zu diesem Zweck antihaftbeschichtet ausgerüstet sein. Der Aufreißstreifen wird, wie auch sonst beim Anbringen von Aufreißstreifen üblich, von gesonderten Spulen abgespult und dem Siegelschuh zugeführt.

Für die Fertigung von Folienschlauchbeuteln wird die ein- oder beidseitig heißsiegelbare Verpackungs-Verbundfolie von der Rolle kommend so der Verpackungsmaschine zugeführt, dass zunächst in Laufrichtung der Aufreißstreifen aufgesiegelt wird. Im Wesentlichen gleichzeitig oder nachfolgend wird eine Längsnaht gesiegelt, die bei einseitig siegelbarer Folie eine Flossennaht sein kann. Nachdem auf diese Weise ein Schlauch hergestellt wurde, wird eine erste gesiegelte Quernaht erzeugt, die den durchlaufenden Aufreißstreifen einschließt. Durch seine beiden äußeren Siegelschichten wird der Aufreißstreifen gas- und feuchtigkeitsdicht eingesiegelt. Kanülen werden weitestgehend vermieden. Im weiteren Ablauf der Schlauchbeutelherstellung wird das Füllgut in den noch offenen Beutel eingefüllt, und der Beutel wird anschließend mit einer weiteren gesiegelten Quernaht verschlossen. Wiederum wird dabei der längs durchlaufende, beidseitig siegelbare Aufreißstreifen fest eingesiegelt.

Abschließend werden die Beutel zwischen zwei Quernähten geschnitten. Der Trennungsschnitt wird vorzugsweise so ausgeführt, dass an der Position des Aufreißstreifens zumindest an einer der beiden Quernähte ein Grifflappen entsteht, damit der Aufreißstreifen besser ergriffen werden kann. Alternativ oder zusätzlich können rechts und links vom Aufreißstreifen zwei kurze Schlitze quer zur Siegelnaht vorgesehen werden.

Der Aufreißstreifen nach dieser Erfindung hat vorzugsweise eine Breite zwischen 5 und 10 mm, weiter vorzugsweise zwischen 1 und 3 mm und insbesondere eine Breite von ungefähr 2 mm. Die Breite ist unter dem Gesichtspunkt auszuwählen, dass der Streifen geeignet ist, einen sauberen Riss mit einer scharfen Risskontur zu erzeugen, gleichzeitig den mechanischen Anforderungen an die Reißfestigkeit standzuhalten und eine gute Verarbeitbarkeit sicherzustellen.

Der mehrschichtige Aufbau des Aufreißstreifens besteht im Allgemeinen aus kaschierten, d.h. mit Kaschierkleber verbundenen, oder auch laminierten Einzelfolien, oder auch beschichteten und coextrudierten Ein- und Mehrschichtfolien innerhalb einer Verbundfolie.

Der Aufreißstreifen besteht zumindest aus einer Kern- oder Trägerschicht aus einem hoch-reißfesten Material, dessen Reißfestigkeit höher als die der Verpackungsfolie ist und an dem beidseitig, direkt oder über Vermittlung weiterer Schichten, zwei außen liegende Siegelschichten aufgebracht sind. Vorzugsweise besteht die Kernschicht, die auch als Trägerschicht oder Basisschicht bezeichnet werden, kann aus mono- oder biaxial orientiertem Polyethylenterephthalat (PET), Polyamid (PA) oder Polypropylen (PP).

Das Aufbringen der Siegelschichten kann durch Co-Extrusion mit der Trägerschicht oder vorzugsweise durch darauf aufgebrachte weiteren Schichten geschehen, an denen die Siegelschichten wiederum coextrudiert sein können.

Materialien und Herstellungsweisen für gattunsgemäße Kunststoff- bzw. Polymerfolien, aus denen Folienverpackungen hergestellt werden, sind dem Fachmann hinlänglich bekannt und brauchen hier nicht näher ausgeführt zu werden.

Die Siegelschichten können allgemein vorzugsweise aus Polyolefinen bestehen, die bei 100 bis 200 °C aufschmelzbar sein sollten. Die genaue Zusammensetzung wird vom Fachmann dem jeweiligen Verwendungszweck angepasst werden. Im Stand der Technik übliche Siegelschichten bestehen beispielsweise aus folgenden Materialien:
- statistische Propylen/Ethylen-Copolymere,
- statistische Propylen/Olefin(1)-Copolymere,
- statistische Propylen/Ethylen/Olefin-Terpolymere,
- Polyethylen
- Polyethylen-Copolymere
- lonomere (Säurecopolymere)
- Polyethylen/Polyester-Copolymere,
- Mischungen aus zwei oder drei der vorstehenden Polymere.

Für die Trägerschicht werden Polypropylen, insbesondere isotaktisches Polypropylen, Polyethylen, Polyamid oder Polyethylenterephthalat sowie Mischungen oder Copolymerisate dieser Polymere bevorzugt. Im Rahmen dieser Erfindung wird bevorzugt, je nach Anwendungsbeispiel, eine mono- oder biaxial orientierte Polyethylenterephthalat-, Polyamid- oder Propylen-Folie eingesetzt.

Die Schichtdicken der Folien innerhalb eines Folienverbundes liegen vorzugsweise zwischen etwa 10 und 30 µm für die Trägerschichten, zwischen 10 und 40 µm für zusätzliche BOPP-Schichten, zwischen 0,5 und 3 µm für coextrudierte Siegelschichten und zwischen 10 und 100 µm für gesondert aufkaschierte oder auflaminierte Siegelschichten.

Alle Schichten können übliche Additive, wie Gleitmittel, Antistatikadditive, Antiblockmittel und dergleichen enthalten.

Die Erfindung wird im Folgenden anhand von Beispielen und Figuren näher beschrieben. Es zeigen:
- Fig. 1:: einen Schlauchbeutel mit längslaufendem Aufreißstreifen;
- Fig. 2:: eine Schnittansicht längs des Aufreißstreifens;
- Fig. 3:: einen Ausschnitt der Schnittansicht aus Fig. 2 im Bereich der strichpunktierten Linien.

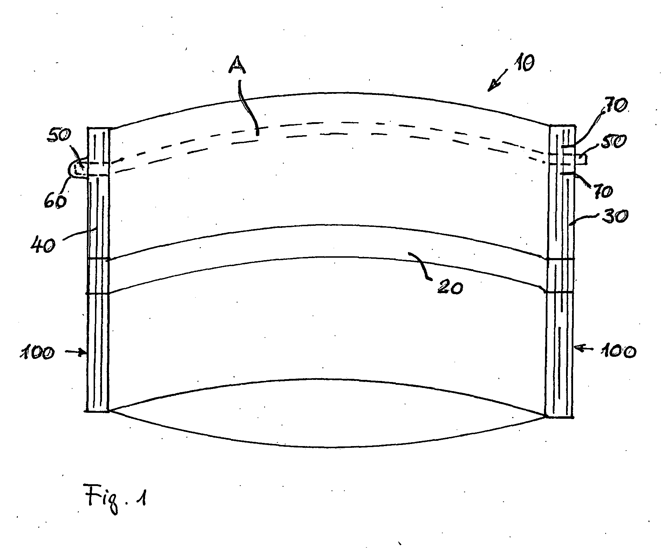

Die Figur 1 zeigt den erfindungsgemäßen Aufreißstreifen A innerhalb eines im Ganzen mit 10 bezeichneten Schlauchbeutels. Der Schlauchbeutel 10 besitzt eine Längsnaht 20 sowie zwei heißgesiegelte Quernähte 30 und 40. Der Aufreißstreifen A ragt im vorliegenden Beispiel mit seinen beiden Enden 50 über die Quernähte 30 und 40 hinaus, um so zum Aufreißen der Verpackung besser ergriffen werden zu können. An der Quernaht 40 ist um das eine vorstehende Ende 50 des Aufreißstreifens A herum ein Grifflappen 60 aus Schlauchbeutelfolie gebildet, der das Anfassen zusätzlich erleichtern soll. An der Quernaht 30 sind beidseitig des durch die Quernaht verlaufenden Aufreißstreifen zwei kurze Schlitze oder Stanzungen 70 angebracht, die Rissanfangspunkte vorgeben. Entsprechende Schlitze können auch beidseitig des Grifflappens 60 zusätzlich vorgesehen sein.

An beiden Quernähten 30 und 40 kann zumindest einseitig an dem dem Aufreißstreifen A entfernteren Nahtende eine vom Rand her etwa bis zur Position 100 eingelegte Falte vorgesehen sein, die die Standfestigkeit der nach dem Aufreißen entstehenden Bootsform deutlich verbessert. Diese Maßnahme ist besonders dann sinnvoll, wenn einseitig siegelbare Verpackungsfolie verwendet wird, so dass auseinandergespreizte Quernahtenden entstehen. Die Längsnaht wird dann als Flossennaht ausgebildet.

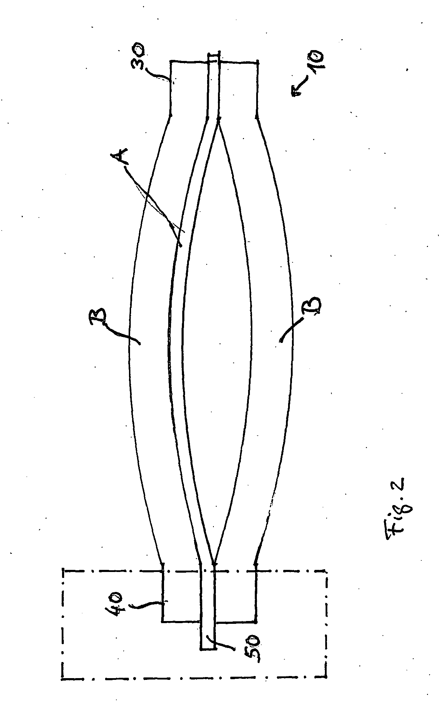

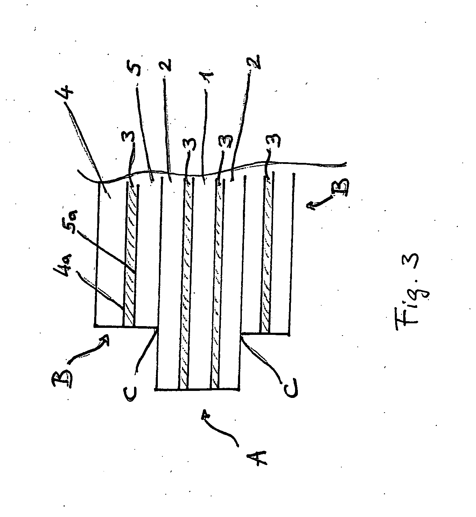

Figur 2 zeigt den Schlauchbeutel 10 in einer Schnittansicht längs des Aufreißstreifens A. Der Aufreißstreifen A ist auf die Innenseite der Schlauchbeutelfolie B aufgesiegelt und so fixiert. Mit seinem Ende 50 steht er über die Quernaht 40 hinaus. Der durch die strichpunktierten Linien gekennzeichnete Bereich ist in Figur 3 zur Verdeutlichung des Aufbaus der Folienverbunde für einzelne Beispiele näher gezeigt.

Figur 3 zeigt einen beispielhaften Schichtaufbau für die Verpackungsfolie und den dazwischen liegenden, eingesiegelten Aufreißstreifen. Die Kontaktflächen zwischen den Folienverbunden A und B im Bereich der Quernaht bilden die Siegelzonen C. Die Schichtdicken sind nicht maßstabsgerecht gezeigt. Die Maßangaben sind im Rahmen der für Folien üblichen Variationsmöglichkeiten und Abweichungen zu verstehen.

### Beispiel 1: Chipstüte, gasdicht mit symmetrischem Aufbau

Der Aufreißstreifen A hat hier für dieses Beispiel die folgende Schichtabfolge:

| | |
|---|---|
| Schicht 1 (mechanische Trägerfolie) | 12 µm BOPET-Folie; |
| Schichten 2 (aufkaschierte Schichten) | 15 µm BOPP mit jeweils außenliegender, 1 bis 2 µm starker coextrudierter Siegelschicht aus Ethylen/Propylen-Copolymer (in der Figur nicht gesondert dargestellt); |
| Schichten 3 (Kaschierkleberschichten) | je 2 µm 2-Komponenten Polyurethankleber (2K-PUR). |

Die Verpackungsfolie B hat für dieses Beispiel die folgende Schichtabfolge:

| | |
|---|---|
| Schicht 4 | 20 µm BOPP-Folie, rückseitig auf der Fläche 4a bedruckt; |
| Schicht 5 | 20 µm BOPP-Folie, an der Verbundinnenseite (zur Kaschierschicht 3 gerichtet) auf Oberfläche 5a metallisiert (Aluminiumbedampft); mit 1 bis 2 µm koextrudierter Siegelschicht aus Ethylen/Propylen-Copolymer auf der zur Siegelzone C gerichteten Seite; |
| Schicht 3 | Kaschierkleberschicht, 2 µm 2-Komponenten Polyurethankleber (2K PUR). |

### Beispiel 2: Wurstverpackung, gasdicht mit symmetrischem Aufbau

Der Aufreißstreifen A hat hier für dieses Beispiel die folgende Schichtabfolge:

| | |
|---|---|
| Schicht 1 (mechanische Trägerfolie) | 20 µm BOPA (biaxial orientierte Polyamid-Folie); |
| Schichten 2 (aufkaschierte Schichten) | jeweils 20 µm polyolefinische Siegelschichten; |
| Schichten 3 (Kaschierkleberschichten) | je 2 µm 2-Komponenten Polyurethankleber (2K-PUR). |

Die Verpackungsfolie B hat für dieses Beispiel die folgende Schichtabfolge:

| | |
|---|---|
| Schicht 4 | 15 µm BOPA-Folie, rückseitig auf der Fläche 4a bedruckt; |
| Schicht 5 | 40 µm polyolefinische Siegelschicht (ohne Metallisierung an 5a); |
| Schicht 3 | Kaschierkleberschicht, 2 µm 2-Komponenten Polyurethankleber (2K PUR). |

## Patentansprüche

1. Aufreißstreifen für Folienverpackungen, **dadurch gekennzeichnet, dass** er mehrschichtig ausgebildet und beidseitig heißsiegelbar ist.

2. Aufreißstreifen nach Anspruch 1, **dadurch gekennzeichnet, dass** er eine Breite zwischen 0,5 und 10 mm, vorzugsweise zwischen 1 und 3 mm, weiter vorzugsweise um 2 mm besitzt.

3. Aufreißstreifen nach Anspruch 1 oder 2, **dadurch gekennzeichnet, dass** der mehrschichtige Aufbau durch mit Kaschierkleber verbundene Einzelfolien innerhalb einer Verbundfolie verwirklicht ist.

4. Aufreißstreifen nach einem der Ansprüche 1 bis 3, **dadurch gekennzeichnet, dass** der Aufreißstreifen wenigstens zwei Siegelschichten enthält, die als äußerste Schichten angeordnet sind und vorzugsweise coextrudierte Außenschichten an einer BOPP-Folie sind.

5. Aufreißstreifen nach einem der Ansprüche 1 bis 4, **dadurch gekennzeichnet, dass** er eine Kern- oder Trägerschicht aus einem hoch-reißfesten Material, vorzugsweise aus mono- oder biaxial orientierten Polyethylenterephthalat (PE), Polyamid (PA) oder Propylen (PP).

6. Verwendung des Aufreißstreifens nach einem der Ansprüche 1 bis 5 zur Herstellung einer mit wenigstens einer Siegelnaht verschlossenen Folienverpackung aus wenigstens einseitig heißsiegelbarer Folie, wobei der Aufreißstreifen während der Herstellung der Folienverpackung auf die siegelbare Schlauchinnenseite durchgehend über seine Länge aufgesiegelt und durch die wenigstens eine Siegelnaht hindurchgeführt wird.

7. Verwendung nach Anspruch 6, wobei die Verpackung ein Folienschlauchbeutel ist, der an beiden Schlauchenden mit jeweils einer als Siegelnaht ausgebildeten Quernaht verschlossen wird und der Aufreißstreifen während der Herstellung des Schlauchbeutels aus einer ein- oder beidseitig siegelbaren Schlauchbeutelfolie in Längsrichtung durchlaufend auf die siegelbare Schlauchinnenseite aufgesiegelt und durch beide Quernähte hindurchgeführt wird.

8. Verwendung nach Anspruch 7, **dadurch gekennzeichnet, dass** der Aufreißstreifen parallel zu einer Längsnaht des Folienschlauchbeutels geführt wird.

9. Verwendung nach einem der Ansprüche 6 bis 8, **dadurch gekennzeichnet, dass** der Aufreißstreifen nahe einer Schlauchbeutelfaltkante aufgesiegelt wird.

10. Verwendung nach einem der Ansprüche 6 bis 8, **dadurch gekennzeichnet, dass** der Aufreißstreifen nahe der mittig zwischen den Schlauchbeutelfaltkanten liegenden Längsnaht aufgesiegelt wird.
